# EUROPEAN PATENT SPECIFICATION

(11) **EP 4 102 777 B1**
(45) Date of publication and mention of the grant of the patent: **02.12.2026**
(21) Application number: 21465526.8
(22) Date of filing: 09.06.2021
(51) Int. Cl.: H04L 12/40

(54) **LIN BUS SYSTEM TIME SYNCHRONISATION IN A MOTOR VEHICLE**
LIN-BUS-SYSTEM ZEITSYNCHRONISIERUNG IN EINEM KRAFTFAHRZEUG
SYNCHRONISATION HORAIRE DU SYSTÈME DE BUS LIN DANS UN VÉHICULE AUTOMOBILE

(43) Date of publication of application: 14.12.2022
(73) Proprietor: AUMOVIO Germany GmbH, 60488 Frankfurt am Main (DE)
(72) Inventor: Stefan, Dragos, 81739 München (DE); Gusan, Dana, 81739 München (DE); Vetoschin, Maxim, 81739 München (DE)
(74) Representative: Aumovio Corporation

(56) References cited:
- US-A1- 2010 061 404
- US-A1- 2019 222 407
- US-A1- 2020 042 032
- US-A1- 2021 006 344
- US-A1- 2021 067 311

## Description

US 2021/067311 A1, US 2010/061404 A1, US 2020/042032 A1, US 2021/006344 A1 respectively disclose bus systems.

The invention is concerned with a method for operating a LIN bus system in a motor vehicle (LIN - Local Interconnect Network, as e.g. specified by the LIN consortium), wherein in the LIN bus system a bus master unit is connected to at least one slave unit over a LIN bus network. The invention is also concerned with a motor vehicle comprising a data network, wherein at least a part of the data network comprises of a LIN bus network of said LIN bus system. The invention is also concerned with the components of the inventive LIN bus system, i.e. a LIN bus master unit and a LIN slave unit.

Automotive Electronic Control Units, ECUs, for vehicles are controlling most of the functions of a motor vehicle by an interaction or input from the user, e.g. in reaction to a press of a button or the turn of the steering column lever or drop arm. Today's system topology of the electronic control units mostly relies on getting this input information and directly taking the corresponding action inside one single ECU. Examples are: Lane Change Lights and/or Hazard lights that are each controlled by a single ECU which both monitors the inputs (from user) and takes final action (light on or light blinking at intervals).

In the present however this system view tends to change to a more centralized approach. The next generation system topology tends to integrate a powerful computer/microcontroller as "The Brain" or central control unit which will monitor the inputs for several different vehicle functions, distribute commands to specific Zone Controller ECU's which will in turn distribute the commands to the Actuator ECU's that will then take the final action according to the command.

However, this new approach does not come without its deficits. As an example of limitation for the new topology, one can consider the Hazard Lights, where the blinking process is a simple action (turning lights on and off after a specific time interval) and this theoretically does not need a lot of processing power. The limitation here is that one Actuator ECU output cannot control all lights / blinkers in the vehicle due to cabling and electrical limitations. Due to this fact, synchronization of the blinker lights is lost and the lights are not turned on and off synchronously. This behavior is not acceptable in the context of a Realtime/Runtime Automotive ECU topology, especially in safety relevant applications.

A preferred method for controlling actuators is based on ECUs that are interconnected using the LIN bus system. In a LIN bus system a LIN bus master unit is connected to at least one LIN slave unit over a bus network. The LIN bus master unit and the respective LIN slave unit each is an ECU that may be based on an electronic circuit with at least one microcontroller and/or microprocessor. A slave unit may be operated as an Actuator ECU, the bus master unit may provide commands to the at least one slave unit over the bus network. An Actuator ECU is connected to at least one actuator, for example a light (for example a blinker light) and/or an electric motor (for example a motor for a passenger seat).The bus network may be a single-wire network based on the standard ISO 9141.

It is an objective of the present invention to provide a vehicle function that involves Actuator ECUs that are controlled by a bus master unit over a LIN bus network.

The objective is accomplished by the subject matter of the independent claims. Advantageous developments with convenient and non-trivial further embodiments of the invention are specified in the dependent claims, the following description, and the drawings.

As one solution the invention provides a method for operating a LIN bus system in a motor vehicle. In the LIN bus system a bus master unit is connected to a slave unit or to several slave units over a bus network. The method comprises that in the bus master unit, LIN messages are generated according to a predefined message schedule and each of the LIN messages is sent out over the bus network to the at least one slave unit. Such a message schedule is known from the LIN bus system and may be defined on the basis of a so-called message schedule table that may define timeslots or frames for a respective ECU, for example the bus master unit or a slave unit, for sending message data over the bus network. Message data that belong to or are associated with a single timeslot or frame are denoted here as "message". The message schedule may be performed repeatedly as is known from the LIN standard such that the messages planned or defined in the message schedule are repeatedly available in the bus network (each containing a respective updated value of, for example, sensor data and/or status data). Note that the message schedule may also comprise that a slave unit sends a message, but for the explanation of the invention, the messages of the bus master unit are important, as is explained in the following.

For controlling an actuator, for example a light, such as a blinker light, or a motor for example for a vehicle window or a vehicle seat, a respective slave unit may be connected to that actuator for controlling and/or powering that actuator. The commands for activating or deactivating the actuator may come from the bus master unit, i.e. it is not one single electronic control unit that both receives input for activating or deactivating the actuator and that also actually controls the actuator correspondingly. Instead, a bus master unit may receive an input and may send commands to one or several slave units that in turn will control a respective actuator in response to the received command. In order to avoid the described deficits, especially when several actuators need to be coordinated, the invention provides the following additional features.

In the bus master unit a current local master system time is stored and periodically updated and at least one of the messages according the message schedule is a "synchronization message" that contains a respective current time value of the local master system time. The master system time may be provided as time data in a data register or a memory storage.

In the respective slave unit, the time value of the master system time is used to synchronize the at least one slave unit with the bus master unit. In the at least one slave unit the at least one synchronization message is received and a respective local slave system time of the slave unit is synchronized as a function of the received time value contained in the at least one synchronization message. In other words, the respective local slave system time is set to a value given by the bus master unit. This will synchronize the system time clock of the ECUs (bus master unit and respective slave unit). Like in the case of the bus master unit, the master system time may be provided as time data in a data register or a memory storage. The respective local system time of the respective slave unit may be then updated locally and periodically by a local hardware clock. For compensating a clock drift, further synchronization message may be transmitted over the bus network.

In the method, a synchronized time base manager is used in the electronic control unit for generating the at least two synchronization messages. The synchronized time base manager uses a supplemented software module for generating the synchronization messages according to a message schedule.

The method comprises that the bus master unit sends out commands for controlling the at least one slave unit, wherein the commands comprise a respective timestamp indicating an execution time for the command. Accordingly, the respective slave unit executes the respective command when its local slave system time reaches the execution time or is equal to the execution time value. In other words, the bus master unit can set or determine, when the respective slave unit will execute the command in the future. Preferably, the bus master unit sends commands to several different slave unit and by setting the respective timestamp for each slave unit, the actuators controlled by these slave units will be operated synchronously or a time difference between the operation or activation of the actuators will be determined by the timestamps (for example, the actuators may start one after the other with a time difference of 1 second). This allows the bus master unit to control or coordinate execution times or operation times of different actuators through respective slave units.

This can be used to synchronize actuators of the vehicle with an audio and/or video playback in the vehicle, for example for exterior and/or interior lighting. One further development comprises that the bus master unit or a central control unit to which the bus master unit is connected detects a predefined future "media event" in media data of a media stream while that media stream is played back in the vehicle. In other word, a look-ahead is performed for detecting an upcoming media event. For the detected future media event at least one command with a respective timestamp is generated, wherein the timestamps indicate the point in time when the media event will occur in the vehicle during the play back of the media stream. The media stream can be, for example, an audio and/or video data stream according to the standard MP3 or AVI or MPEG or H.264 or H.265. The predefined media event can be, for example, the beat of a bass drum or a click or an explosion sound, just to name examples. The media event can be identified, for example based on template media data (describing a prototypical version of the media event, e.g. typical frequencies) that may then be correlated with the media data of the media stream for detecting the media event. The media event can be defined, for example, on the basis of a data model, for example a hidden Markov model or an artificial neural network. By setting the timestamp to the point in time when the media event will be displayed or played back, the actuators will also be activated such that the actuators operated when the media event occurs. For example, as actuators, a least one light may flash and/or an electric motor may provide a haptic signal for the media event.

The invention provides the advantage that in the processor circuits or computer circuits of both the bus master unit and each slave unit the local system time is the same or is synchronized such that a distance between these electronic control units does not cause asynchronous behavior due to transmission latency. The time values in each ECU are the same or at least a difference between the time values can be set to a value smaller than a predefined known threshold. For example, the starting time or switching time for activating actuators, for example lights of the vehicle, can be set to the same value or to the same point in time for several of the slave units. Thus, the activation of actuators can be synchronized or coordinated although each actuator may be controlled by different slave unit.

It is to be noted here that not every existing slave unit that may be connected to the bus network needs to synchronize its local slave system time as described. In the following, the term "at least one slave unit" refers to the at least one connected slave unit that participates in the described synchronization procedure.

The invention also comprises further developments that provide additional technical benefits.

One further development comprises that the message schedule defines at least two synchronization messages, wherein in one of the at least two synchronization messages the bus master unit sends a number of seconds of the master system time and in another one of the at least two synchronization messages the bus master unit sends a number of milliseconds or a number of nanoseconds of the master system time. In other words, the respective current time value is not sent in one single synchronization message, but two or more than two synchronization messages are used. This provides the advantage that in a slave unit different functionalities can use different aspects or parts of the master system time, i.e. the value for setting or comparing the "seconds" on one side and the value for setting or comparing the "milliseconds" or "nanoseconds". For example, for correcting a drift of a hardware clock in a slave unit, using the number of milliseconds or nanoseconds can be beneficial as once the slave system time has been set or initialized to correspond to the system time of the bus master unit, for correcting the drift, a precision of milliseconds or nanoseconds is beneficial.

One further development comprises that the message schedule is repeated in successive sending cycles. For example, the sending cycle can be repeated every 10 milliseconds or in general in a time period in the range from 5 milliseconds to 5000 milliseconds. This provides the benefit that the time value of the master system time is available in the bus network repeatedly or throughout the operation of the LIN bus system. This allows for a re-initialization of the slave system time in the at least one slave unit.

In a slave unit the received time value from the at least one synchronization message may be directly written or stored as the current time value of the slave system time. However, the received time value reflects the point in time when the bus master unit sent out the synchronization message, whereas the point in time when the slave system time is set or synchronized, is a later point in time as transmitting the at least one synchronization message through the communication channel of the bus network results in a latency or delay or offset. More precision or less offset may be achieved regarding the synchronization as follows.

The method further comprises that for synchronizing the local slave system time as a function of the received time value, the respective slave unit applies a compensation value to the received time value for generating a compensated time value and sets the local slave system time using the compensated time value. The compensation value describes a channel delay resulting from a duration of a transfer of the respective synchronization message from the master unit to the respective slave unit. This provides the benefit that the delay introduced by transmitting the at least synchronization message is compensated. The compensation value can be determined or stored in a slave unit for example at production time. It may be determined by measurement in a prototype of the bus system. Alternatively, a clock synchronization algorithm may be applied for determining the compensation value at runtime. Examples of such a clocks synchronization algorithm are based on measuring the round-trip time RTT or round-trip delay RTD. Such a synchronization algorithm is known for example from the NTP (Network Time Protocol) or SNTP (Simple Network Time Protocol).

One further development comprises that the bus master unit or a central control unit to which the bus master unit is connected detects a predefined user input for activating of several illumination lights or several blinkers lights that are connected to different slave units and if the user input is detected the commands with the timestamp for activating the lights are generated once or repeatedly, wherein the timestamps indicate a common turn-on or switch-on time for switching on the lights or blinkers. Thus, although the lights may be controlled by different slave units, they will be turned on and off synchronously in the vehicle.

The bus master unit may also comprise a clock for locally updating the master system time. One further development comprises that the bus master unit periodically receives a respective foreign time value over a non-LIN network connection and synchronizes its own master system time as a function of the respective received foreign time value. In other words, the bus master system time is also set from an external source, for example the described central control unit or "brain" in a vehicle data network. Thus, the LIN bus system as a whole may be synchronized with an external clock, for example the clock of a central control unit or a central clock of a vehicle. Examples for a non-LIN network connection are networks based on: Ethernet, CAN (Controller Area Network), Flexray.

As another solution the invention provides a motor vehicle comprising a data network, wherein at least one part or a zone of the data network comprises of at least one LIN bus system, wherein in the LIN bus system a bus master unit is connected to at least one slave unit over a bus network, and wherein the bus master unit is configured to generate LIN messages and send out the respective LIN message over the bus network to the at least one slave unit according to a predefined message schedule. The bus master unit is also configured to store and periodically update a current local master system time. "Updating" means that the master system time "ticks" or progresses. At least one of the messages according the message schedule is a synchronization message that contains a respective current time value of the master system time.

The respective slave unit is configured to receive the at least one synchronization message and to synchronize a respective local slave system time of the slave unit as a function of the received time value contained in the at least one synchronization message. Overall the LIN bus system is configured to perform an embodiment of the inventive method.

The motor vehicle may be configured as a passenger vehicle (car), a truck, a van, a motorcycle, an omnibus. The respective LIN bus system may comprise one or more than one LIN slave unit that may be configured as a respective "Actuator ECU", i.e. as an ECU that is connected to an actuator, like for example a light or an electric motor. The bus master unit can be an ECU that may be configured as a "Zone ECU", i.e. as an ECU that is connected to both the bus network on one side and to another part of the data network on the other side. From that part of the data network, the Zone ECU may receive foreign commands and/or a foreign time value like has been described above. The bus master unit can also be an ECU that is configured to directly receive input from a user of the vehicle and that controls the at least one slave unit, preferably several slave units, using for example commands that also comprise timestamps for setting the execution time of the respective command in the slave unit.

At least two synchronization messages are generated. For this purpose, a synchronized time base manager is implemented in the electronic control unit. The synchronized time base manager is supplemented by a software module for generating the synchronization messages according to a message schedule.

One further development comprises that in the data network a central control unit is provided that is connected to the Bus master unit over said non-LIN network connection. The central control unit is configured to periodically provide a foreign time value to the master unit over the non-LIN network connection and the master unit is configured synchronize its own master system time as a function of the respective received foreign time value. The central control unit or "brain" may control several such bus master units that each in turn may control one or more than one slave unit. Thus several LIN bus systems may be coordinated by the central control unit. The central control unit may distribute or send commands to the several bus master units over the non-LIN network connection and each bus master unit may function or be configured as a command gateway that translates the received commands of the central control unit into a LIN message and forwards the command to the respective slave unit.

As another solution the invention provides said LIN bus system for a motor vehicle, wherein in the LIN bus system a bus master unit is connected to at least one slave unit over a bus network, wherein the bus master unit and the at least one slave unit are configured to perform an embodiment of the inventive method.

As another solution the invention provides said bus master unit for a LIN bus system, wherein the master unit is configured to generate LIN message and send out the respective LIN message over the bus network to the at least one slave unit according to a predefined message schedule, and to store and periodically update a current local master system time, wherein at least one of the messages according the message schedule is a synchronization message that contains a respective time value of the local system time. The bus master unit may be configured as an ECU. The bus master unit may comprise one or more than one microcontroller and/or one or more than one microprocessor. For performing the method steps described in connection with the bus master unit, computer readable instructions may be stored in a data storage of the bus master unit. The bus master unit may comprise a hardware for connecting to the LIN bus network (LIN controller).

As another solution the invention provides said LIN slave unit, the slave unit is configured to receive at least one synchronization message and to synchronize a respective local slave system time of the slave unit as a function of a received time value contained in the at least one synchronization message. The slave unit may be configured as an ECU. The slave unit may comprise one or more than one microcontroller and/or one or more than one microprocessor. For performing the method steps described in connection with the slave unit, computer readable instructions may be stored in a data storage of the slave unit. The slave unit may comprise a hardware for connecting to the LIN bus network (LIN controller).

In the following an exemplary implementation of the invention is described. The figures show:
Fig. 1 a schematic illustration of an embodiment of the inventive motor vehicle; and
Fig. 2 a schematic illustration of a data network comprising at least one LIN bus system performing an embodiment of the inventive method.

In the figures elements that provide the same function are marked with identical reference signs.

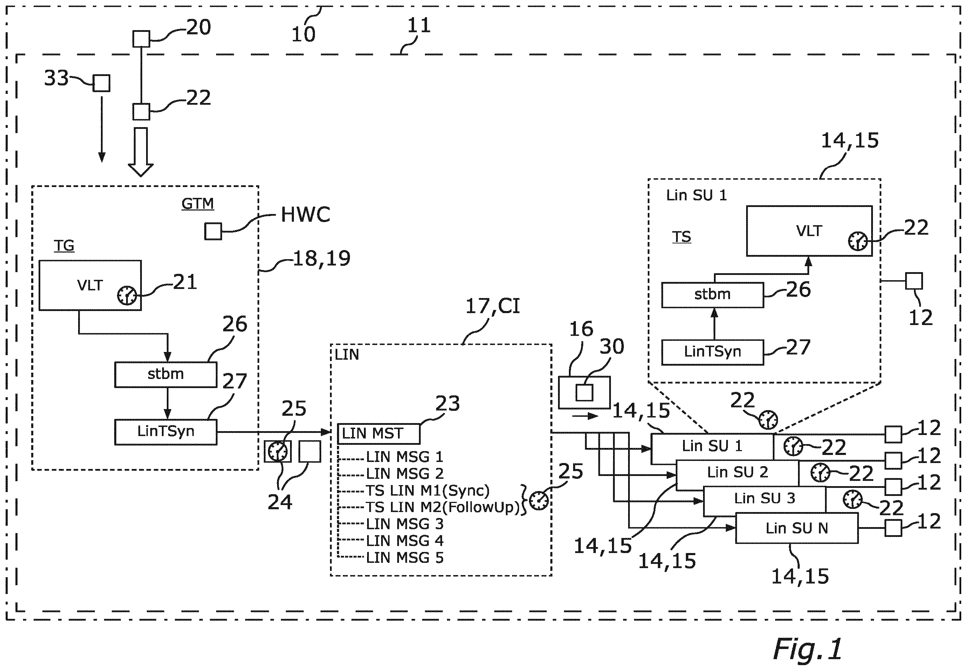

Fig. 1 shows a vehicle 10 that can be, for example, a passenger vehicle or a truck. In the vehicle 10, a LIN bus system 11 may be provided for controlling actuators 12 as a function of or in reaction to an input 13, for example an input provided by a user or by a sensor. An actuator 12 can be, for example, an illumination light or a blinker light or an electric motor, just to name examples. Each actuator 12 can be controlled by a separate or individual electronic control unit 14. It is also possible that several actuators 12 are connected to a common or to the same electronic control unit 14. Each electronic control unit 14 can be based on an electronic circuit that may comprise at least one microcontroller and/or at least one microprocessor. Each electronic control unit 14 may be configured as a LIN slave unit 15 (LIN SU) that may receive commands 16 over a LIN bus network 17 from a LIN bus master unit 18 that may also be configured as an electronic control unit 19. The actuators 12 may be controlled by the respective slave unit 15 in response to a respective received command 16.

The bus master unit 18 may receive the input 13 from a sensor or from the user over a non-LIN data network 20, e.g. an Ethernet network or a CAN bus or a Flexray bus.

The electronic control units 14, 19 may each administer or provide a local system time, i.e. a master system time 21 in the bus master unit 18 and a respective local slave system time 22 in each slave unit 15. Such a local system time is also named virtual local time VLT.

In the bus system 11 the slave units 15 on one side and the bus master unit 18 on the other side are synchronized in that the local master system time 21 is copied or transferred to the slave unit 15 for setting their local slave system time 22.

To this end, a LIN message schedule table 23 (LIN MST) may define or provide one or two synchronization messages 24 (TS_LIN_MSG1, TS_LIN_MSG2) for transferring a respective current time value 25 of the bus master system time 21 to the slave units 15 for setting or synchronizing the slave system time 22 in the respective slave unit 15.

If two synchronization messages 24 are defined, the first message can be a sync message followed by the second synchronization message as a follow-up message. One synchronization message may comprise the number of seconds of the master system time 21, the other synchronization message may comprise the number of milliseconds or nanoseconds of the master system time 21.

For generating the synchronization messages 24, a synchronized time base manager 26, stbm, may be implemented in the electronic control unit 14, 19 as is known from the standard AUTOSAR. *The synchronized time base managers 26 may be enhanced or supplemented by a software module 27, LinTSyn, for generating the synchronization* messages *24 according to the* message *schedule* 23.

The commands 16 may therefore comprise a timestamp 30 for signaling to the slave units 15 at which point in time the respective command 16 is to be executed. The respective slave unit 15 will then -after receiving the respective command 16-control or operate the respective actuator 12 at the point in time defined by the timestamp 30. This enables the bus master unit 18 to operate the actuators 12 synchronously or at a predefined time offset from each other in reaction to the input 13.

For setting the master system time 21, the bus master unit 18 can be configured as a global time master GTM that sets its own master system time 21 using, for example, a hardware clock HWC. Additionally or alternatively, the bus master unit 18 may receive a foreign time value 33 once or regularly for example out of the non-LIN data network 20 and may initialize or set its local master system time 21 as a function of the foreign time value 33. The bus master unit 18 then acts as a time gateway TG for the slave units 15.

This concept of the Time Synchronization, TS, information transmission is preferably based on LIN as Communication Interface Cl. The bus system 11 comprises one Global Time Master GTM or a Time Gateway TG, which is connected via the LIN bus network 17 to at least one LIN slave unit 15 as a respective Time Slave TS. Time Synchronization information is preferably repeatedly sent as time value 25 to the LIN slave units 15 using a customized message schedule table 23 which is modified by inserting two Time Synchronization specific messages (Sync and Follow_Up). These messages can be inserted into message schedule table 23 as often as is deemed necessary or as the LIN slave system time needs to be updated/refreshed. The respective time slave unit 15 will update its Virtual Local Time VLT according to the time value 25 received on the LIN Communication Interface Cl. After each transmission of the respective current time value, the bus master unit 18 and the respective slave unit 15 should be equal with differences in the dimension of the transfer time of the synchronization messages 24. Worst-case accuracy will depend on LIN interface polling.

The mechanism or logic is also fit for implementation of communication channel delay compensation algorithms if increased synchronization precision is needed. A time synchronization algorithm is capable of achieving precision by compensating for the travel time and at least a part of the processing time of the synchronization messages from sending to reception (time of flight or time of travel of the synchronization message).

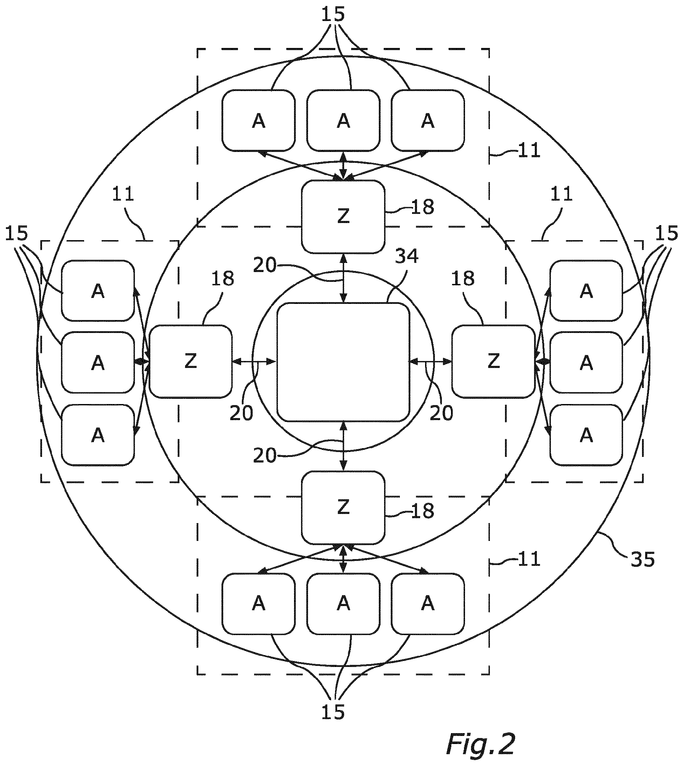

Fig. 2 illustrates, how in the vehicle 10 several LIN bus systems 11 may be kept in synchronization by connecting the respective bus master unit 18 to a central control unit 34 over the described non-LIN data network 20. From the point of view of the central control unit 34, the respective bus master unit 18 may act or function as a Zone ECU Z for controlling a peripheral zone 35 of actuators 12 that are controlled by the slave units 15 of the respective LIN bus system 11. The slave units 15 may therefore act as respective Actuator ECU A. Different zones are indicated here as rings.

Thus, the synchronization of, e.g., the blinker lights in the data network is possible, by providing a synchronization mechanism across the networks.

The challenge is that without network synchronization mechanism, actions triggered by "The Brain" or central control unit 34 can be executed synchronously by the Zone ECUs Z in a synchronized manner.

The solution is a mechanism or logic that allows synchronization of actions across all the Zone ECUs distributed in the vehicle environment. The same mechanism or logic allows synchronization of the actions at the "Actuators" level of the Actuator ECUs. So far, no solution is known to synchronize over the LIN bus.

Having the possibility to synchronize actions of all time synchronization capable ECUs connected via LIN bus, can reduce complexity, cost and will expand the capabilities of the current systems. This new capability opens a way for new features to be implemented in automotive.

The concept is based on the master-slave principles, the ECU that is the Bus master of a specific LIN bus (the ECU that sends the LIN headers on the bus according to the active Lin schedule table) being also the time master for the same bus. The implementation of the LIN time synchronization mechanism relies on two specially configured LIN frames, LIN Sync and LIN Follow_Up frames that are carrying the time synchronization relevant information from the LIN time master ECU to one or more LIN time slave ECUs. The mechanism is also fit for implementation of communication channel delay compensation algorithms if increased synchronization precision is needed.

Areas of applicability are automotive specific products, in particular actuators that control exterior and interior lighting, synchronizing lane change lights, hazard lights in zone controller platforms using Zone ECUs, synchronizing ambient lighting with a sound system.

Overall, the example shows how LIN time synchronization may be provided.

### Reference signs

- 10: vehicle
- 11: LIN bus system
- 12: actuator
- 13: input
- 14: electronic unit
- 15: slave unit
- 16: command
- 17: LIN bus network
- 18: bus master unit
- 19: electronic control unit
- 20: non-LIN data network
- 21: master system time
- 22: slave system time
- 23: message schedule table
- 24: synchronization message
- 25: time value
- 26: synchronized time base managers
- 27: software module
- 30: timestamp
- 33: foreign time value
- 34: central control unit
- A: actuator control unit
- GTM: global time master
- TG: time gateway
- TS: time slave
- Z: zone control unit

## Claims

1. Method for operating a Local Interconnect Network, LIN, bus system (11) in a motor vehicle (10), wherein in the LIN bus system (11) a bus master unit (18) is connected to at least one slave unit (15) over a bus network (17), wherein the method comprises that according to a predefined message schedule (23) LIN messages are generated in the bus master unit (18) and the respective LIN message is sent out over the bus network (17) to the at least one slave unit (15),
wherein in the bus master unit (18) a current local master system time (21) is stored and periodically updated,
wherein at least one of the LIN messages defined by the message schedule (23) is a synchronization message (24) that contains a respective time value (25) of the local master system time (21) and in the at least one slave unit (15) the at least one synchronization message (24) is received and a respective local slave system time (22) of the slave unit (15) is synchronized as a function of the received time value (25) contained in the at least one synchronization message (24),
wherein for generating the at least one synchronization message (24),
a synchronized time base manager (26) is used in an electronic control unit (14, 19),
and wherein the synchronized time base manager (26) uses a supplemented software module (27) for generating the synchronization messages (24) according to a message schedule (23),
**characterized in that** the bus master unit (18) sends out commands (16) for controlling the at least one slave unit (15), wherein the commands (16) comprise a respective timestamp (30) indicating an execution time for the command (16), and the respective slave unit (15) executes the respective command (16) when its local slave system time (22) reaches the execution time and wherein the bus master unit (18) or a central control unit (34) to which the bus master unit (18) is connected detects a predefined future media event in media data of a media stream while the media stream is played back in the vehicle (10) and for the detected future media event the commands (16) with the timestamps (30) are generated, wherein the timestamps (30) indicate the point in time when the media event will occur during the play back of the media stream.

2. Method according to claim 1, wherein the message schedule (23) defines at least two synchronization messages (24), wherein in one of the at least two synchronization messages (24) the bus master unit (18) sends a number of seconds of the master system time (21) and in another one of the at least two synchronization messages (24) the bus master unit (18) sends a number of milliseconds or nanoseconds of the master system time (21).

3. Method according to any of the preceding claims, wherein the message schedule (23) is repeatedly executed in successive sending cycles.

4. Method according to any of the preceding claims, wherein for synchronizing the local slave system time (22) as a function of the received time value (25), the respective slave unit (15) applies a compensation value to the received time value (25) for generating a compensated time value (25) and sets the local slave system time (22) using the compensated time value (25), wherein the compensation value describes a channel delay resulting from a duration of a transfer of the respective synchronization message (24) from the master unit to the respective slave unit (15).

5. Method according to any of the preceding claims, wherein the bus master unit (18) or a central control unit (34) to which the bus master unit (18) is connected detects a predefined user input (13) indicating the activation of several lights or several blinkers that are connected to different slave units (15) and if the user input (13) is detected the commands (16) with the timestamp (30) are generated once or repeatedly, wherein the timestamps (30) indicate a common switch-on time for switching on the lights or blinkers.

6. Method according to any of the preceding claims, wherein the bus master unit (18) periodically receives a respective foreign time value (33) over a non-LIN network connection and synchronizes its own master system time (21) as a function of the respective received foreign time value (33).

7. Motor vehicle (10) comprising a data network, wherein at least a part of the data network comprises of at least one Local Interconnect Network, LIN, bus system (11), wherein in the LIN bus system (11) a bus master unit (18) is connected to at least one slave unit (15) over a bus network (17), and wherein the master unit is configured to generate LIN messages and send out the respective LIN message over the bus network (17) to the at least one slave unit (15) according to a predefined message schedule, and to store and periodically update a current local master system time (21), wherein at least one of the messages according the message schedule is a synchronization message (24) that contains a respective time value (25) of the local master system time, and wherein
the respective slave unit (15) is configured
to receive the at least one synchronization message (24) and
to synchronize a respective local slave system time (22) of the slave unit (15) as a function of the received time value (25) contained in the at least one synchronization message (24),
wherein for generating the at least one synchronization message (24),
a synchronized time base manager (26) is implemented in an electronic control unit (14, 19),
and wherein the synchronized time base manager (26) is supplemented by a software module (27) for generating the synchronization messages (24) according to a message schedule (23), **characterized in that** the bus master unit (18) is configured to send out commands (16) for controlling the at least one slave unit (15), wherein the commands (16) comprise a respective timestamp (30) indicating an execution time for the command (16), and the respective slave unit (15) is configured to execute the respective command (16) when its local slave system time (22) reaches the execution time and wherein the bus master unit (18) or a central control unit (34) to which the bus master unit (18) is connected is configured to detect a predefined future media event in media data of a media stream while the media stream is played back in the vehicle (10) and for the detected future media event the commands (16) with the timestamps (30) are generated, wherein the timestamps (30) indicate the point in time when the media event will occur during the play back of the media stream; and
wherein the the motor vehicle (10) comprises further means for performing the method according to claims 2 to 5.

8. Motor vehicle (10) according to claim 7, wherein in the data network a central control unit (34) is provided that is connected to the bus master unit (18) over a non-LIN network connection, wherein the central control unit (34) is configured to periodically provide a foreign time value (33) to the bus master unit (18) over the non-LIN network connection and wherein the master unit is configured to synchronize its own master system time (21) as a function of the respective received foreign time value (33).

9. A Local Interconnect Network, LIN, bus system (11) for a motor vehicle (10), wherein in the LIN bus system (11) a bus master unit (18) is connected to at least one slave unit (15) over a bus network (17), wherein the the LIN bus system comprises further means for performing the method according to any of the claims 1 to 6.

10. A Local Interconnect Network, LIN, bus master unit (18) comprised in the LIN bus system (11) according to claim 9, wherein the bus master unit (18) is further configured to generate LIN messages and send out the respective LIN message over the bus network (17) to the at least one slave unit (15) according to a predefined message schedule (23), and to store and periodically update a current local master system time (21), wherein at least one of the messages according the message schedule (23) is a synchronization message (24) that contains a respective time value (25) of the local master system time (21).

11. A Local Interconnect Network, LIN, slave unit (15) comprised in the LIN bus system (11) according to claim 9, wherein the slave unit (15) is further configured to receive at least one synchronization message (24) and to synchronize a respective local slave system time (22) of the slave unit (15) as a function of a received time value (25) contained in the at least one synchronization message (24).

## Patentansprüche

1. Verfahren zum Betreiben eines Local Interconnect Network (LIN)-Bus-Systems (11) in einem Kraftfahrzeug (10), wobei in dem LIN-Bus-System (11) eine Bus-Master-Einheit (18) über ein Bus-Netzwerk (17) mit mindestens einer Slave-Einheit (15) verbunden ist, wobei das Verfahren aufweist, dass gemäß einem Nachrichtenplan (23) LIN-Nachrichten in der Bus-Master-Einheit (18) erzeugt werden und die jeweilige LIN-Nachricht über das Bus-Netzwerk (17) an die mindestens eine Slave-Einheit (15) ausgesendet wird,
wobei in der Bus-Master-Einheit (18) eine aktuelle lokale Master-Systemzeit (21) gespeichert und periodisch aktualisiert wird,
wobei mindestens eine der durch den Nachrichtenplan (23) definierten LIN-Nachrichten eine Synchronisierungsnachricht (24) ist, die einen jeweiligen Zeitwert (25) der lokalen Master-Systemzeit (21) enthält, und in der mindestens einen Slave-Einheit (15) die mindestens eine Synchronisierungsnachricht (24) empfangen wird und eine jeweilige lokale Slave-Systemzeit (22) der Slave-Einheit (15) in Abhängigkeit von dem in der mindestens einen Synchronisierungsnachricht (24) enthaltenen empfangenen Zeitwert (25) synchronisiert wird,
wobei zum Erzeugen der mindestens einen Synchronisierungsnachricht (24) ein synchronisierter Zeitbasismanager (26) in einer elektronischen Steuereinheit (14, 19) verwendet wird, und wobei der synchronisierte Zeitbasismanager (26) ein ergänzendes Softwaremodul (27) zum Erzeugen der Synchronisierungsnachrichten (24) gemäß einem Nachrichtenplan (23) verwendet, **dadurch gekennzeichnet, dass** die Bus-Master-Einheit (18) Befehle (16) zum Steuern der mindestens einen Slave-Einheit (15) aussendet, wobei die Befehle (16) einen jeweiligen Zeitstempel (30) aufweisen, der eine Ausführungszeit für den Befehl (16) angibt, und die jeweilige Slave-Einheit (15) den jeweiligen Befehl (16) ausführt, wenn ihre lokale Slave-Systemzeit (22) die Ausführungszeit erreicht, und wobei die Bus-Master-Einheit (18) oder eine zentrale Steuereinheit (34), mit der die Bus-Master-Einheit (18) verbunden ist, ein vordefiniertes zukünftiges Medienereignis in Mediendaten eines Medienstroms erfasst, während der Medienstrom im Fahrzeug abgespielt wird (10), und für das erkannte zukünftige Medienereignis die Befehle (16) mit den Zeitstempeln (30) erzeugt werden, wobei die Zeitstempel (30) den Zeitpunkt angeben, zu dem das Medienereignis während der Wiedergabe des Medienstroms auftreten wird.

2. Verfahren nach Anspruch 1, wobei der Nachrichtenplan (23) mindestens zwei Synchronisierungsnachrichten (24) definiert, wobei in einer der mindestens zwei Synchronisierungsnachrichten (24) die Bus-Master-Einheit (18) eine Anzahl von Sekunden der Master-Systemzeit (21) sendet und in einer anderen der mindestens zwei Synchronisierungsnachrichten (24) die Bus-Master-Einheit (18) eine Anzahl von Millisekunden oder Nanosekunden der Master-Systemzeit (21) sendet.

3. Verfahren nach einem der vorhergehenden Ansprüche, wobei der Nachrichtenplan (23) wiederholt in aufeinanderfolgenden Sendezyklen ausgeführt wird.

4. Verfahren nach einem der vorhergehenden Ansprüche, wobei zum Synchronisieren der lokalen Slave-Systemzeit (22) in Abhängigkeit von dem empfangenen Zeitwert (25) die jeweilige Slave-Einheit (15) einen Kompensationswert auf den empfangenen Zeitwert (25) anwendet, um einen kompensierten Zeitwert (25) zu erzeugen, und die lokale Slave-Systemzeit (22) unter Verwendung des kompensierten Zeitwerts (25) einstellt, wobei der Kompensationswert eine Kanalverzögerung beschreibt, die sich aus einer Dauer einer Übertragung der jeweiligen Synchronisierungsnachricht (24) von der Master-Einheit zu der jeweiligen Slave-Einheit (15) ergibt.

5. Verfahren nach einem der vorhergehenden Ansprüche, wobei die Bus-Master-Einheit (18) oder eine zentrale Steuereinheit (34), mit der die Bus-Master-Einheit (18) verbunden ist, eine vordefinierte Benutzereingabe (13) erfasst, die die Aktivierung mehrerer Leuchten oder mehrerer Blinker angibt, die mit verschiedenen Slave-Einheiten (15) verbunden sind, und, wenn die Benutzereingabe (13) erfasst wird, die Befehle (16) mit dem Zeitstempel (30) einmal oder wiederholt erzeugt werden, wobei die Zeitstempel (30) eine gemeinsame Einschaltzeit zum Einschalten der Leuchten oder Blinker angeben.

6. Verfahren nach einem der vorhergehenden Ansprüche, wobei die Bus-Master-Einheit (18) periodisch einen jeweiligen Fremdzeitwert (33) über eine Nicht-LIN-Netzwerkverbindung empfängt und ihre eigene Master-Systemzeit (21) in Abhängigkeit von dem jeweiligen empfangenen Fremdzeitwert (33) synchronisiert.

7. Kraftfahrzeug (10), das ein Datennetzwerk aufweist, wobei mindestens ein Teil des Datennetzwerks mindestens ein Local Interconnect Network (LIN)-Bus-System (11) aufweist, wobei in dem LIN-Bus-System (11) eine Bus-Master-Einheit (18) über ein Bus-Netzwerk (17) mit mindestens einer Slave-Einheit (15) verbunden ist, und wobei die Master-Einheit dazu ausgebildet ist, LIN-Nachrichten zu erzeugen und die jeweilige LIN-Nachricht über das Bus-Netzwerk (17) an die mindestens eine Slave-Einheit (15) gemäß einem vordefinierten Nachrichtenplan auszusenden und eine aktuelle lokale Master-Systemzeit (21) zu speichern und periodisch zu aktualisieren, wobei mindestens eine der Nachrichten gemäß dem Nachrichtenplan eine Synchronisierungsnachricht (24) ist, die einen jeweiligen Zeitwert (25) der lokalen Master-Systemzeit enthält, und wobei die jeweilige Slave-Einheit (15) dazu ausgebildet ist, die mindestens eine Synchronisierungsnachricht (24) zu empfangen und eine jeweilige lokale Slave-Systemzeit (22) der Slave-Einheit (15) in Abhängigkeit von dem empfangenen Zeitwert (25), der in der mindestens einen Synchronisierungsnachricht (24) enthalten ist, zu synchronisieren,
wobei zum Erzeugen der mindestens einen Synchronisierungsnachricht (24), ein synchronisierter Zeitbasismanager (26) in einer elektronischen Steuereinheit (14, 19) implementiert ist, und wobei der synchronisierte Zeitbasismanager (26) durch ein Softwaremodul (27) zum Erzeugen der Synchronisierungsnachrichten (24) gemäß einem Nachrichtenplan (23) ergänzt ist, **dadurch gekennzeichnet, dass** die Bus-Master-Einheit (18) dazu ausgebildet ist, Befehle (16) zum Steuern der mindestens einen Slave-Einheit (15) auszusenden, wobei die Befehle (16) einen jeweiligen Zeitstempel (30) aufweisen, der eine Ausführungszeit für den Befehl (16) angibt, und die jeweilige Slave-Einheit (15) dazu ausgebildet ist, den jeweiligen Befehl (16) auszuführen, wenn seine lokale Slave-Systemzeit (22) die Ausführungszeit erreicht und wobei die Bus-Master-Einheit (18) oder eine zentrale Steuereinheit (34), mit der die Bus-Master-Einheit (18) verbunden ist, dazu ausgebildet ist, ein vordefiniertes zukünftiges Medienereignis in Mediendaten eines Medienstroms zu erfassen, während der Medienstrom in dem Fahrzeug (10) wiedergegeben wird, und für das erfasste zukünftige Medienereignis die Befehle (16) mit den Zeitstempeln (30) erzeugt werden, wobei die Zeitstempel (30) den Zeitpunkt angeben, zu dem das Medienereignis während der Wiedergabe des Medienstroms auftreten wird; und
wobei das Kraftfahrzeug (10) ferner Mittel zum Durchführen des Verfahrens nach den Ansprüchen 2 bis 5 aufweist.

8. Kraftfahrzeug (10) nach Anspruch 7, wobei in dem Datennetzwerk eine zentrale Steuereinheit (34) bereitgestellt ist, die mit der Bus-Master-Einheit (18) über eine Nicht-LIN-Netzwerkverbindung verbunden ist, wobei die zentrale Steuereinheit (34) dazu ausgebildet ist, periodisch einen Fremdzeitwert (33) an die Bus-Master-Einheit (18) über die Nicht-LIN-Netzwerkverbindung bereitzustellen, und wobei die Master-Einheit dazu ausgebildet ist, ihre eigene Master-Systemzeit (21) in Abhängigkeit von dem jeweiligen empfangenen Fremdzeitwert (33) zu synchronisieren.

9. Local Interconnect Network (LIN)-Bus-System (11) für ein Kraftfahrzeug (10), wobei in dem LIN-Bus-System (11) eine Bus-Master-Einheit (18) mit mindestens einer Slave-Einheit (15) über ein Bus-Netzwerk (17) verbunden ist, wobei das LIN-Bus-System ferner Mittel zum Durchführen des Verfahrens nach einem der Ansprüche 1 bis 6 aufweist.

10. Local Interconnect Network (LIN)-Bus-Master-Einheit (18), die in dem LIN-Bus-System (11) nach Anspruch 9 umfasst ist, wobei die Bus-Master-Einheit (18) ferner dazu ausgebildet ist, LIN-Nachrichten zu erzeugen und die jeweilige LIN-Nachricht über das Bus-Netzwerk (17) an die mindestens eine Slave-Einheit (15) gemäß einem vordefinierten Nachrichtenplan (23) auszusenden und eine aktuelle lokale Master-Systemzeit (21) zu speichern und periodisch zu aktualisieren, wobei mindestens eine der Nachrichten gemäß dem Nachrichtenplan (23) eine Synchronisierungsnachricht (24) ist, die einen jeweiligen Zeitwert (25) der lokalen Master-Systemzeit (21) enthält.

11. Local Interconnect Network (LIN)-Slave-Einheit (15), die in dem LIN-Bus-System (11) nach Anspruch 9 umfasst ist, wobei die Slave-Einheit (15) ferner dazu ausgebildet ist, mindestens eine Synchronisierungsnachricht (24) zu empfangen und eine jeweilige lokale Slave-Systemzeit (22) der Slave-Einheit (15) in Abhängigkeit von einem empfangenen Zeitwert (25), der in der mindestens einen Synchronisierungsnachricht (24) enthalten ist, zu synchronisieren.

## Revendications

1. Procédé d'exploitation d'un système de bus (11) de réseau d'interconnexion local (LIN) dans un véhicule automobile (10), dans lequel, dans le système de bus LIN (11), une unité maîtresse de bus (18) est connectée à au moins une unité esclave (15) sur un réseau de bus (17), dans lequel le procédé est **caractérisé en ce que**, selon un calendrier de messages prédéfini (23), des messages LIN sont générés dans l'unité maîtresse de bus (18) et le message LIN respectif est envoyé sur le réseau de bus (17) à l'au moins une unité esclave (15),
dans lequel, dans l'unité maîtresse de bus (18), un temps système maître local courant (21) est stocké et mis à jour périodiquement,
dans lequel au moins l'un des messages LIN définis par le calendrier de messages (23) est un message de synchronisation (24) qui contient une valeur temporelle respective (25) du temps système maître local (21) et dans l'au moins une unité esclave (15), l'au moins un message de synchronisation (24) est reçu et un temps système esclave local respective (22) de l'unité esclave (15) est synchronisé en fonction de la valeur temporelle reçue (25) contenue dans l'au moins un message de synchronisation (24),
dans lequel, pour générer l'au moins un message de synchronisation (24), un gestionnaire de base de temps synchronisée (26) est utilisé dans une unité de commande électronique (14, 19), et dans lequel le gestionnaire de base de temps synchronisée (26) utilise un module logiciel enrichi (27) pour générer les messages de synchronisation (24) selon un calendrier de messages (23), **caractérisé en ce que** l'unité maîtresse de bus (18) envoie des instructions (16) pour la commande de l'au moins une unité esclave (15), dans lequel les instructions (16) comprennent une estampille temporelle respective (30) indiquant un temps d'exécution pour l'instruction (16), et l'unité esclave respective (15) exécute l'instruction respective (16) lorsque son temps système esclave local (22) atteint le temps d'exécution, et dans lequel l'unité maîtresse de bus (18) ou une unité de commande centrale (34) à laquelle est connectée l'unité maîtresse de bus (18) détecte un événement multimédia futur prédéfini dans les données multimédias d'un flux multimédia pendant la lecture du flux multimédia dans le véhicule (10) et, pour l'événement multimédia futur détecté, les instructions (16) avec les estampilles temporelles (30) sont générées, dans lequel les estampilles temporelles (30) indiquent le moment où l'événement multimédia se produira pendant la lecture du flux multimédia.

2. Procédé selon la revendication 1, dans lequel le calendrier de messages (23) définit au moins deux messages de synchronisation (24), dans lequel, dans l'un des au moins deux messages de synchronisation (24), l'unité maîtresse de bus (18) envoie un nombre de secondes du temps système maître (21) et, dans un autre des au moins deux messages de synchronisation (24), l'unité maîtresse de bus (18) envoie un nombre de millisecondes ou de nanosecondes du temps système maître (21).

3. Procédé selon l'une quelconque des revendications précédentes, dans lequel le calendrier de messages (23) est exécuté de façon répétée dans des cycles d'envoi successifs.

4. Procédé selon l'une quelconque des revendications précédentes, dans lequel, pour synchroniser le temps système esclave local (22) en fonction de la valeur de temps reçue (25), l'unité esclave respective (15) applique une valeur de compensation à la valeur de temps reçue (25) pour générer une valeur de temps compensée (25) et règle le temps système esclave local (22) à l'aide de la valeur de temps compensée (25), dans lequel la valeur de compensation décrit un retard de canal résultant d'une durée d'un transfert du message de synchronisation respectif (24) de l'unité maître à l'unité esclave respective (15).

5. Procédé selon l'une quelconque des revendications précédentes, dans lequel l'unité maîtresse de bus (18) ou une unité de commande centrale (34) à laquelle est connectée l'unité maîtresse de bus (18) détecte une entrée utilisateur prédéfinie (13) indiquant l'activation de plusieurs voyants ou plusieurs clignotants qui sont connectés à différentes unités esclaves (15) et si l'entrée utilisateur (13) est détectée, les instructions (16) avec l'estampille temporelle (30) sont générées une seule fois ou de manière répétée, dans lequel les estampilles temporelles (30) indiquent un temps d'allumage commun pour l'allumage des voyants ou des clignotants.

6. Procédé selon l'une quelconque des revendications précédentes, dans lequel l'unité maîtresse de bus (18) reçoit périodiquement une valeur de temps étrangère respective (33) sur une connexion de réseau non-LIN et synchronise son propre temps système maître (21) en fonction de la valeur de temps étrangère respective reçue (33).

7. Véhicule automobile (10) comprenant un réseau de données, dans lequel au moins une partie du réseau de données comprend au moins un système de bus (11) de réseau d'interconnexion local (LIN), dans lequel, dans le système de bus LIN (11), une unité maîtresse de bus (18) est connectée à au moins une unité esclave (15) sur un réseau de bus (17), et dans lequel l'unité maîtresse est configurée pour générer des messages LIN et envoyer le message LIN respectif sur le réseau de bus (17) à l'au moins une unité esclave (15) selon un calendrier de messages prédéfini, et pour stocker et mettre à jour périodiquement un temps système maître local courant (21), dans lequel au moins l'un des messages selon le calendrier de messages est un message de synchronisation (24) qui contient une valeur de temps respective (25) du temps système maître local, et dans lequel l'unité esclave respective (15) est configurée pour recevoir l'au moins un message de synchronisation (24) et pour synchroniser un temps système esclave local respectif (22) de l'unité esclave (15) en fonction de la valeur de temps reçue (25) contenue dans l'au moins un message de synchronisation (24),
dans lequel, pour générer l'au moins un message de synchronisation (24),
un gestionnaire de base de temps synchronisée (26) est mis en œuvre dans une unité de commande électronique (14, 19), et dans lequel le gestionnaire de base de temps synchronisée (26) est enrichi avec un module logiciel (27) pour générer les messages de synchronisation (24) selon un calendrier de messages (23), **caractérisé en ce que** l'unité maîtresse de bus (18) est configurée pour envoyer des instructions (16) pour commander l'au moins une unité esclave (15), dans lequel les instructions (16) comprennent une estampille temporelle respective (30) indiquant un temps d'exécution pour l'instruction (16), et l'unité esclave respective (15) est configurée pour exécuter l'instruction respective (16) lorsque son temps système esclave local (22) atteint le temps d'exécution, et dans lequel l'unité maîtresse de bus (18) ou une unité de commande centrale (34) à laquelle est connectée l'unité maîtresse de bus (18) est configurée pour détecter un événement multimédia futur prédéfini dans les données multimédias d'un flux multimédia pendant la lecture du flux multimédia dans le véhicule (10) et, pour l'événement multimédia futur détecté, les instructions (16) avec les estampilles temporelles (30) sont générées, dans lequel les estampilles temporelles (30) indiquent le moment où l'événement multimédia se produira pendant la lecture du flux multimédia ; et
dans lequel le véhicule automobile (10) comprend en outre des moyens pour mettre en œuvre le procédé selon les revendications 2 à 5.

8. Véhicule automobile (10) selon la revendication 7, dans lequel, dans le réseau de données est prévue une unité de commande centrale (34) qui est connectée à l'unité maîtresse de bus (18) sur une connexion de réseau non-LIN, dans lequel l'unité de commande centrale (34) est configurée pour fournir périodiquement une valeur de temps externe (33) à l'unité maîtresse de bus (18) sur la connexion de réseau non-LIN et dans lequel l'unité maîtresse est configurée pour synchroniser son propre temps système maître (21) en fonction de la valeur de temps externe reçue respective (33).

9. Système de bus (11) de réseau d'interconnexion local (LIN) pour un véhicule automobile (10), dans lequel, dans le système de bus LIN (11), une unité maîtresse de bus (18) est connectée à au moins une unité esclave (15) sur un réseau de bus (17), dans lequel le système de bus LIN comprend en outre des moyens pour mettre en œuvre le procédé selon l'une quelconque des revendications 1 à 6.

10. Unité maîtresse de bus (18) de réseau d'interconnexion local (LIN) comprise dans le système de bus LIN (11) selon la revendication 9, dans laquelle l'unité maîtresse de bus (18) est en outre configurée pour générer des messages LIN et envoyer le message LIN respectif sur le réseau de bus (17) à l'au moins une unité esclave (15) selon un calendrier de messages prédéfini (23), et pour stocker et mettre à jour périodiquement un temps système maître local courant (21), dans laquelle au moins l'un des messages selon le calendrier de messages (23) est un message de synchronisation (24) qui contient une valeur de temps respective (25) du temps système maître local (21).

11. Unité esclave (15) de réseau d'interconnexion local (LIN) comprise dans le système de bus LIN (11) selon la revendication 9, dans laquelle l'unité esclave (15) est en outre configurée pour recevoir au moins un message de synchronisation (24) et pour synchroniser un temps système esclave local respectif (22) de l'unité esclave (15) en fonction d'une valeur de temps reçue (25) contenue dans l'au moins un message de synchronisation (24).
